# EUROPEAN PATENT APPLICATION

(11) **EP 1 050 692 A1**
(43) Date of publication of application: **08.11.2000**
(21) Application number: 99500073.4
(22) Date of filing: 06.05.1999
(51) Int. Cl.: F16B 25/10, F16B 13/00

(54) **Self - tapping wall plug**

(71) Applicant: Hopama, S.A., 46115 Alfara del Patriarca, Valencia (ES)
(72) Inventor: Palanca Martinez, Honorato, 46115 Alfara del Patriarca - Valencia (ES)
(74) Representative: Primo de Rivera y Urquijo, Jose Antonio

(57) **Abstract**

This wall plug has a tubular body (1) which in prolonged in a front portion (2); the tubular body has an external screw thread (17), of decreasing height, an inner hole (14) with longitudinal ribs (15) and a head (11) with drive grooves (16). The front portion (2) is joined to the tubular body (1) by means of longitudinal arms and has a transverse window (22) and two symmetrical halves (28) which finish in conical surfaces (29) with side edges (30) intended to act on a surface and make a hole for inserting the self-tapping plug.

## Description

### PURPOSE OF THE INVENTION

As its title indicates, this invention refers to a self-tapping plug of the type used in walls and friable surfaces and which comprises a rear head, a substantially tubular intermediate portion provided with a screw thread with a section that gets wider towards the rear area, and a front portion intended for penetrating the surface in question.

### BACKGROUND OF THE INVENTION

There are currently different self-tapping wall plugs on the market that, in general, have a rear drive head, an intermediate portion of tubular configuration to allow a screw to be screwed in subsequently, and a front portion, which has the function of penetrating the material of the surface in which it is wished to position the plug.

As background to the invention we should single out the following registrations:
- U.S. Patent 4,026,186. It refers to a bit anchorage with the general configuration as described above. The front portion of this plug has a diameter that gets larger towards the free end and finishes in oblique planes that define cutting edges, while said front portion adopts a configuration similar to a drill bit tip.
- U.S. Patent 4,601,625. In this Patent the front portion adopts a plane configuration, of constant thickness, which defines a central and two side tips at its front end, adopting a configuration similar to a centre bit. This wall plug has an axial hole which reaches the front end of the intermediate portion and affects one of the side surfaces of the front spoon-shaped blade, so that, when a plug is inserted into this hole, it will act with its front end on the afore-said spoon-shaped side causing it to bend towards one side at the rear union area with the intermediate portion.
- U.S. Patent 4,642,012. Unlike the others, the self-tapping wall plug covered by this Patent has a substantially cylindrical intermediate body, with an outer thread and with an inner hole that affects only its rear half. The intermediate body thread is uniform and is prolonged slightly from the front end of the intermediate body defining a cutting edge intended to permit the penetration of the plug into a bearing surface.
- U.S. Patent 5,160,225. It refers to a wall plug consisting of a slightly conical tubular portion, with an outer thread, which has two diametrically opposed conical sectors at its front end with cutting edges. These sectors permit the penetration of the wall plug into a bearing surface.
- Patent EP 0 539 139. This patent describes a self-tapping expansion plug, which has a tubular body, closed at its front end, and which is prolonged in a front portion composed of a central rod finishing in a point and two side fins, which also finish in a point; this front portion has the configuration of a centre bit. This wall plug has a side section where the tubular body expands as the screw enters.
- U.S. Patent 5,558,479. The plug covered by this Patent has a configuration very similar to that of U.S. Patent 4,601,625, with the difference that, like a centre bit, the front blade union area is offset to one side of the intermediate portion, affecting the outlet hole from this intermediate portion to the central area of the front blade.
- Utility Model 8801764. This Utility Model describes the same self-tapping plug of U.S. Patent 4,026,186 mentioned above.

### DESCRIPTION OF THE INVENTION

The self-tapping plug covered by this invention has a tubular body, on the outer surface of which there is a peripheral rear shoulder in the form of a stop or a conical head, a slightly tapering intermediate portion of a diameter that decreases towards the front end of the plug, and a front cylindrical portion.

On its outer surface this tubular body has a screw thread of a height that decreases towards the front end of the plug.

The inner hole in the afore-said tubular body has a substantially constant crosssection and is provided with longitudinal triangular section ribs which are diametrically opposed.

This inner hole has four diametrically opposed grooves in its rear end to permit the plug to be turned with a Philips type star screwdriver.

The afore-said grooves are offset at angle in respect of the longitudinal ribs, so that the grooves alternate with the ribs.

The tubular body is prolonged at its front end in two diametrically opposed, parallel longitudinal arms, which get thicker towards the central area of the plug, defining a transverse window, after which the two arms are joined by the respective inner edges to form a common front portion.

This front portion has four inner surfaces arranged in two perpendicular planes separated by the union of their common edge.

Two of these inner surfaces have a total width the same as the outside diameter of the cylindrical portion of the tubular body and the function of the outer edges of these surfaces is to act on the material of a wall or surface when the plug is inserted into it.

The other two inner surfaces of the front portion define a total width less than the outside diameter of the cylindrical portion of the tubular body, so that its outer edges are inset in respect of the path of rotation described by the other two outer edges, which prevents them from acting on the material of a wall or surface while the plug is being screwed in.

The perpendicular layout of the afore-said inner surfaces and the difference in the width thereof determines that the front portion of the plug has two symmetrical halves in respect of the longitudinal axis of the plug, defining a section similar to two right-angle triangles placed face to face at their right-angle apexes, with the legs aligned and the hypotenuses parallel.

The halves of the front portion of the plug finish in substantially conical surfaces with necks at the ends corresponding to the surfaces of smaller total width, so that two of the end edges are cutting ones in order to assist its action on the wall material or surface to be penetrated, whereas the other two end edges, corresponding to the inner surfaces of smaller total width, are inset in respect of the path described by the two cutting edges.

The configuration described enables the plug to be screwed into a wall or friable material surface due, on the one hand, to the perforating effect of the front portion and, on the other, to the progressive action of the screw thread on the hole made by the front portion.

The definition of the truncated-cone exterior surface on the rear zone of the tubular body means that the plug exerts greater lateral pressure on the hole made by the front portion, in the final section of its travel.

This plug has a shorter overall length than those mentioned in the previous section, which prevents it from juddering when being screwed into a surface.

The configuration of the front portion improves the removal of the material detached from the surface and provides constant stable advance while the plug is being inserted into a surface, with the result that greater precision is achieved in the initial self-drilling, eradicating sideward movements, deformation of the hole defined by it, and possible flaking on the surface in question.

The union of the front and rear portions of the plug helps the screw fitted to pass through it without difficulty without it being necessary to apply a force or pressure on it over and above that used to successfully screw it on to the rear portion.

### DESCRIPTION OF THE FIGURES

To supplement the description being given and in order to assist the understanding of the features of the invention, this descriptive report is accompanied by a set of drawings in which, on a purely informative and non-restrictive basis, the following is represented:

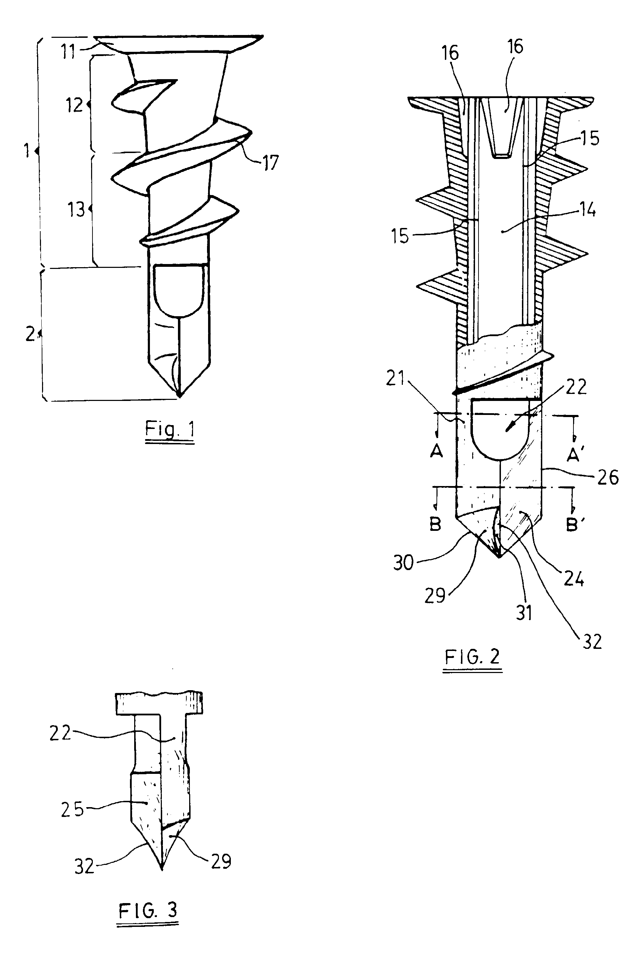

- Figure 1 shows a front elevational view of the self-tapping plug.
- Figure 2 shows an elevational view of the plug, partly sectioned by a vertical plane.
- Figure 3 shows a close-up of a front portion of the plug, in a profile view.

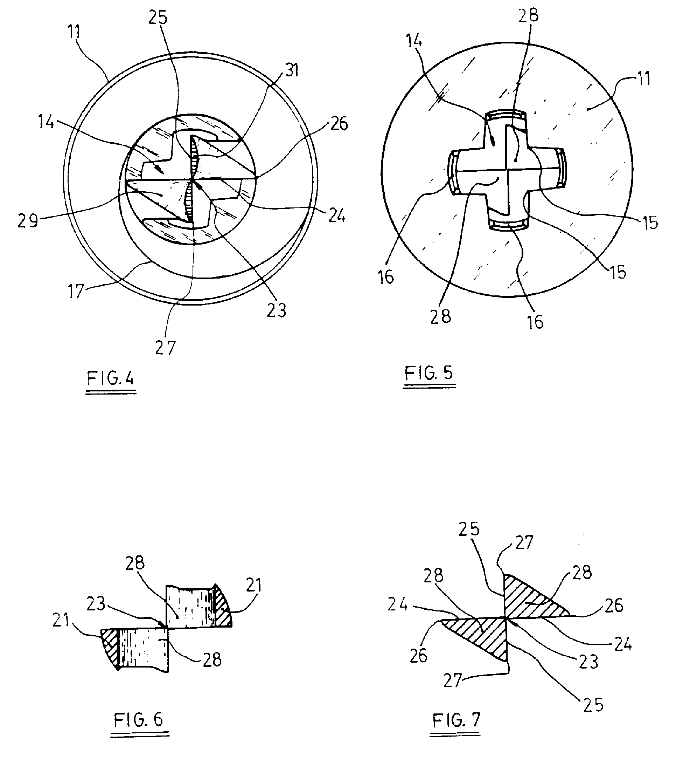

- Figure 4 shows a bottom plan view of the plug.
- Figure 5 shows a top plan view of the self-tapping plug.
- Figure 6 corresponds to the A-A' section shown in figure 2.
- Figure 7 corresponds to the B-B' section shown in figure 2.

### PREFERENTIAL EMBODIMENT OF THE INVENTION

As may be seen in the above-mentioned figures, the self-tapping screw covered by the invention has a tubular body (1), which is prolonged in a portion (2) at its front end.

The tubular body (1) has a peripheral shoulder (11) on its outer edge in the form of a head, a slightly truncoconical intermediate portion (12) and a cylindrical front portion (13).

The inner hole (14) in the tubular body (2) has a substantially constant crosssection and is provided with longitudinal ribs (15) which are diametrically opposed to enable a screw to be screwed into this hole (14) once the plug has been inserted into the bearing surface.

At the rear end of the hole (14) there are four diametrically opposed slots (16) arranged between the ribs (15) in such a way that the ribs (15) and the grooves (16) are in alternate positions inside the hole (14).

On its outer surface this tubular body (1) has a screw thread (17) which decreases in height towards the front end of the plug.

The front portion (2) of the plug has a substantially shorter length than the tubular body (1) and the front portion (2) is joined to the tubular body (1) by means of diametrically opposed parallel longitudinal arms (21).

The arms (21) get thicker towards the central-front area of the plug and between them a transverse window (22) is defined, as of which the two arms are joined by inner edges (23) forming the front portion (2).

The front portion (2) of the plug has two inner surfaces (24) and (25) arranged on two perpendicular planes and separated by the union of the inner edges (23).

In the front portion (2) the surfaces (24) define a width the same as the outside diameter of the cylindrical portion (13) of the tubular body (1) and the function of the outer edges (26) of these surfaces (24) is to act on the material of a wall or surface when the plug is inserted into it.

The surfaces (25), arranged in a perpendicular plane to the surfaces (24), define a total width in the corresponding direction small than the outside diameter of the cylindrical portion (13) of the tubular body (1), so that the outer edges (27) corresponding to the former are inset in respect of the path of rotation defined by the edges (26).

Owing to the perpendicular arrangement of the surfaces (24) and (25) the front portion (2) has two halves (28) that are symmetrical in respect of the imaginary axis of the plug.

The halves (28) of the front portion (2) finish in two substantially conical surfaces (29) which, at the intersection with the respective inner planes (24) each define outer edges (30); these outer edges (30) will act on the material of a wall or bearing surface while the plug is being screwed in.

Matching the outer ends of the surfaces (25) the surfaces (29) each have necks (31) which determine the definition, at the intersection of these necks (31) with the inner surfaces (25), of edges (32) which are inset in respect of the path described by the edges (30) when the plug is turning.

It should be mentioned that the elements described may be subjected to modifications, providing that this does not entail an alteration of the essential features of the invention which is claimed below.

## Claims

1. Self-tapping screw of the type of those which comprise a tubular body (1) which is prolonged in a front portion (2) intended for screwing into a wall or surface, this tubular body (2) having an outer screw thread (17), an inner hole (14) and a head (11) with grooves (16) so that it may be turned by a tool; it is characterized in that the tubular body (1) has a slightly truncoconical intermediate portion (12) on its outer surface and a cylindrical front portion (13).

2. Plug, according to claim 1, characterized in that the inner hole (14) has longitudinal ribs (15) which are diametrically opposed.

3. Plug, according to claims 1 and 2, characterized in that the longitudinal ribs (15) and the grooves (16) are arranged in alternate positions on the inner surface of the whole (14).

4. Plug, according to claim 1, characterized in that the screw thread (17) decreases in height towards the front end of the plug.

5. Plug, according to claim 1, characterized in that the front portion (2) of the plug has a substantially smaller length than the tubular body (1).

6. Plug, according to claim 5, characterized in that the front portion (2) is joined to the tubular body (1) by means of longitudinal arms (21).

7. Plug, according to claim 6, characterized in that the longitudinal (21) arms are parallel.

8. Plug, according to claim 6, characterized in that the longitudinal arms (21) are diametrically opposed in respect of the tubular body (1).

9. Plug, according to the claim 6, characterized in that the longitudinal arms (21) decrease in thickness towards the central-front area of the plug and are prolonged in the two halves (28) of the front portion (2).

10. Plug, according to claim 6, characterized in that there is a transverse window (22) defined between the longitudinal arms (21).

11. Plug, according to claim 9, characterized in that the two halves (28) of the front portion (2) are joined by the inner edges (23).

12. Plug, according to claim 11, characterized in that in the front portion (2) the two halves (28) define four inner surfaces (24) and (25), arranged in two perpendicular planes and separated by the union of the inner edges (23).

13. Plug, according to claim 12, characterized in that in the front portion (2) the surfaces (24) define a width the same as the outside diameter of the cylindrical portion (13) of the tubular body (1).

14. Plug, according to claim 12, characterized in that the surfaces (24) finish at the sides in outer edges (26).

15. Plug, according to claim 12, characterized in that the surfaces (25) have a total width smaller than the outside diameter of the cylindrical portion (13) of the tubular body (1).

16. Plug, according to claim 15, characterized in that the surfaces (25) finish at the sides in outer edges (27).

17. Plug, according to claim 16, characterized in that the edges (27) are inset in respect of the path of rotation defined by the edges (26).

18. Plug, according to claim 9, characterized in that the two halves (28) of the front portion (2) define substantially conical surfaces (29) at the front end of the plug.

19. Plug, according to claim 18, characterized in that the surfaces (29) define outer edges (30) at the intersection with the inner planes (24).

20. Plug, according to claim 18, characterized in that the surfaces (29) have necks (31) matching the outer ends of the surfaces (25).

21. Plug, according to claim 20, characterized in that the necks (31) define edges (32) at the intersection with the inner surfaces (25).

22. Plug, according to claim 21, characterized in that the edges (32) are inset in respect of the path described by the edges (30) while the plug is turning.
